# EUROPÄISCHE PATENTSCHRIFT

(11) **EP 2 499 762 B1**
(45) Veröffentlichungstag und Bekanntmachung des Hinweises auf die Patenterteilung: **01.03.2017**
(21) Anmeldenummer: 10757591.2
(22) Anmeldetag: 22.09.2010
(51) Int. Cl.: H04B 17/00, H04M 1/725

(54) **MIKROFONSYSTEM SOWIE VERFAHREN ZUR AUSWAHL EINER NUTZFREQUENZ FÜR EIN MIKROFONSYSTEM SOWIE COMPUTERPROGRAMM**
MICROPHONE SYSTEM AND METHOD FOR SELECTING AN OPERATING FREQUENCY FOR A OR SAID MICROPHONE SYSTEM AND COMPUTER PROGRAM
SYSTÈME DE MICROPHONE, PROCÉDÉ DE SÉLECTION D'UNE FRÉQUENCE UTILE POUR LE SYSTÈME DE MICROPHONE ET PROGRAMME INFORMATIQUE CORRESPONDANT

(30) Priorität: 09.11.2009 DE 102009046548
(43) Veröffentlichungstag der Anmeldung: 19.09.2012
(73) Patentinhaber: Robert Bosch GmbH, 70442 Stuttgart (DE)
(72) Erfinder: KOCH, Hartwig, 31139 Hildesheim (DE); KIEHNE, Holger, 31224 Peine (DE); KLINGLER, Florian, 37073 Goettingen (DE); CIRCA, Radu, 31134 Hildesheim (DE); HOFMANN, Frank, 31139 Hildesheim (DE); SPREITZ, Gerald, 30880 Laatzen (DE); JAKOBLEW, Sascha, 31141Hildesheim (DE)
(86) Internationale Anmeldenummer: PCT/EP2010/063964
(87) Internationale Veröffentlichungsnummer: WO 2011/054598

(56) Entgegenhaltungen:
- WO-A1-99/09671
- WO-A1-2006/095152
- WO-A1-2007/096683
- US-A- 5 418 839

## Beschreibung

### Stand der Technik

Die Erfindung betrifft ein Mikrofonsystem mit einer Basisstation und mit einem Mikrofonmodul, wobei die Basisstation ausgebildet ist, drahtlos auf einer Nutzfrequenz übermittelte Audioinformationen und/oder Testinformationen von dem Mikrofonmodul zu empfangen, wobei die Basisstation ein Empfangsanalysemodul aufweist und/oder mit diesem gekoppelt ist, welches ausgebildet ist, die Empfangsqualität der Audioinformation und/oder der Testinformationen bei mehreren möglichen Sendefrequenzen zu analysieren. Die Erfindung betrifft auch ein Verfahren zur Auswahl einer Nutzfrequenz für ein derartiges Mikrofonsystem sowie ein Computerprogramm.

Drahtlose Mikrofone werden bei einer Vielzahl von Anwendungen, wie zum Beispiel Konzerten, Diskussionen, Theateraufführungen, Opern etc. eingesetzt. Die drahtlosen Mikrofone sind üblicher Weise mit einem Sender verbunden, welcher über eine Sendefrequenz die mit dem Mikrofon aufgenommenen Audiosignale an eine Basisstation überträgt. Ausgehend von der Basisstation werden die Audiosignale dann zu Aufnahmegeräten, Verstärkern, etc. weiter gegeben. Bei größeren Veranstaltungen ist es durchaus üblich, dass eine Vielzahl von derartigen drahtlosen Mikrofonen eingesetzt werden. Betrachtet man beispielsweise ein Konzert, so werden oftmals mehr als 40 oder 50 drahtlose Mikrofone im Parallelbetrieb eingesetzt. Aufgrund dieses Parallelbetriebs ergibt sich die Notwendigkeit, die Sendefrequenzen der einzelnen drahtlosen Mikrofone derart aufeinander abzustimmen, dass jedem drahtlosen Mikrofon ein eigener Kanal zugeordnet ist. Die Installation der drahtlosen Mikrofone ist somit aufwendig und umständlich.

In der Druckschrift DE 10035824 A1, ist ein System zur Steuerung von mobilen, drahtlos mit einer Zentraleinheit verbundenen Sende- und/oder Empfangsvorrichtung beschrieben. Die Zentraleinheit und die Sende- und/oder Empfangsvorrichtungen sind über Mittel zur bidirektionalen Kommunikation verbunden, so dass eine einfache Konfiguration der Sende- und/oder Empfangsvorrichtungen ermöglicht ist. Mit dem System ist eine übergeordnete Verwaltung, Auswahl und Steuerung der Betriebsparameter der drahtlosen Übertragungsstrecken möglich.

Die Druckschrift WO2006/095152A1 betrifft ein Babyphonesystem, wobei ein Mobilteil neben Audiosignalen einen Pilotton auf einem Kanal überträgt. Eine Empfangsstation ist ausgebildet, verfügbare Kanäle zu scannen und den Kanal mit dem Pilotton zu suchen. Ist der Kanal mit dem Pilotton gefunden, wird dieser für die Übertragung des Audiosignals verwendet.

Die Druckschriften WO 9909671A1 und US5418839A betreffen beide Telefonanlagen und offenbaren jeweils Kommunlkationstechniken zur Verbindung von Mobiltelefonen mit einer Basisstation. Die Druckschrift WO 9909671A1 bildet den nächstkommenden Stand der Technik.

### Offenbarung der Erfindung

Im Rahmen der Erfindung wird ein Mikrofonsystem mit den Merkmalen des Anspruches 1 sowie ein Verfahren zur Auswahl einer Nutzfrequenz für ein oder das Mikrofonsystem mit den Merkmalen des Anspruches 7 offenbart. Bevorzugte oder vorteilhafte Ausführungsformen der Erfindung ergeben sich aus den Unteransprüchen, der nachfolgenden Beschreibung sowie den beigefügten Figuren.

In der allgemeinsten Ausgestaltung betrifft die Erfindung ein Mikrofonsystem, welches mindestens eine Basisstation und mindestens ein Mikrofonmodul aufweist. Basisstation und Mikrofonmodul sind so ausgebildet, dass von dem Mikrofonmodul über eine Nutzfrequenz übermittelte Audioinformationen und/oder Testinformationen von der Basisstation empfangen werden können. Das Mikrofonmodul gliedert sich in einen Mikrofonabschnitt, welcher zur Aufnahme von Audiosignalen ausgebildet ist, sowie einen Senderabschnitt auf, der die drahtlose Kommunikation mit der Basisstation übernimmt. Insbesondere ist das Mikrofonmodul tragbar ausgebildet. Die Basisstation ist vorzugsweise stationär ausgebildet und weist bevorzugt eine Schnittstelle, wie zum Beispiel eine Audioschnittstelle, eine USB-Schnittstelle, DECT-Schnittstelle o.ä. auf, um die Audiosignale z. B. an einen Verstärker oder an ein Aufnahmegerät weiterzuleiten. Die Audioinformationen bilden die Audiosignale ab und sind beilspielsweise) als kodierte Audiosignale ausgebildet. Bei den Testinformationen handelt es sich um künstliche Testsequenzen, welche nicht unbedingt einem Audiosignal entsprechen müssen.

Die Basisstation weist ein Empfangsanalysemodul auf und/oder ist mit diesem gekoppelt. Das Empfangsanalysemodul ist dazu ausgebildet, die Empfangsqualität und damit die Übertragungsqualität der Audioinformationen und/oder der Testinformationen, welche von dem Mikrofonmodul übermittelt wurden, bei mehreren möglichen Sendefrequenzen zu analysieren. Es ist somit möglich, dass das Mikrofonmodul die Informationen über verschiedene Sendefrequenzen, zum Beispiel testweise, überträgt und das Empfangsanalysemodul die jeweilige Empfangsqualität analysiert und damit bestimmt und/oder als eine Kenngröße quantifiziert.

Erfindungsgemäß wird vorgeschlagen, dass das Empfangsanalysemodul ausgebildet ist, aus den mehreren möglichen Sendefrequenzen die Nutzfrequenz auszuwählen. Insbesondere erfolgt die Auswahl automatisiert und/oder auf Basis der Empfangsqualitäten der Sendefrequenzen.

Der Erfindung liegt die Überlegung zugrunde, dass es vorteilhaft ist, wenn die Auswahl der Nutzfrequenz nicht durch ein Trial-and-Error-Verfahren, sondern durch ein objektives Auswahlverfahren und/oder automatisiert erfolgt. Dadurch wird die Auswahl verbessert, die Einrichtzeit des Mikrofonsystem verringert und letztendlich die Empfangsqualität des eingerichteten Mikrofonsystems optimiert. Insbesondere wird die Empfangsqualität und damit die Übertragungsqualität zwischen dem Mikrofonmodul als Sender und der Basisstation als Empfänger als Entscheidungsbasis berücksichtigt. Die Beurteilung der Empfangsqualität und damit der Übertragungsqualität ist deutlich zuverlässiger als eine reine Messung der Störleistung an der Basisstation. Dies ist dadurch begründet, dass auch die spektrale Form und das Zeitverhalten eines Störsignals in die Empfangsqualität eingeht und nicht nur dessen Leistung. Ein schmalbandiger Störer wie zum Beispiel ein Sinusträger hat bei gleicher Leistung wie ein breitbandigeres Störsignal geringere Auswirkungen auf die Empfangs- und damit Übertragungsqualität.

Bei einer Weiterbildung der Erfindung ist vorgesehen, dass die Audioinformationen und/oder die Testinformationen als digitale Signale ausgebildet sind bzw. übertragen werden. Derartige digitale Signale erlauben eine hohe Kontrolle der Übertragungsqualität, indem Übertragungsparameter, wie z.B. die Kompression und/oder die Redundanz der übertragenen Signale gegenüber den Ausgangssignalen, angepasst werden können. Ferner ermöglicht es die Übertragung von digitalen Signalen, dass die Testinformation als eine Testsequenz ausgebildet ist, die der Basisstation vorzugsweise bereits bekannt ist, so dass eine qualitativ hochwertige Einschätzung der Empfangsqualität möglich ist.

Bei einer besonders bevorzugten Ausführungsform der Erfindung wird die Empfangsqualität auf Basis einer Bitfehlerrate, eines Bitfehlerverhältnisses und/oder auf Basis einer Kanalbitfehlerrate analysiert. Die Bestimmung der Bitfehlerrate bzw. des Bitfehlerverhältnisses erfolgt, indem die Basisstation als Empfänger eine als Testinformation oder Testsequenz übertragene, bekannte Bitfolge mit einer hinterlegten Bitfolge vergleicht und fehlende oder falsche Bits bestimmt und anhand der Anzahl oder der zeitlichen Verteilung die jeweilige Fehlerkenngröße und damit die Empfangsqualität bestimmt. Alternativ oder ergänzend kann, insbesondere bei unbekannten Bitfolgen in der Testinformation, die Basisstation als Empfänger zunächst die übertragene Bitfolge dekodieren und dann wieder encodieren und mit der übertragenen Bitfolge vergleichen. Durch dieses Vorgehen kann die sogenannte Kanalbitfehlerrate geschätzt werden, die ebenfalls eine Basis zur Analyse der Empfangsqualität bilden kann.

Bei einer möglichen Weiterbildung der Erfindung ist ein Frequenzanalysemodul vorgesehen, welches ausgebildet ist, ein Sendefrequenzspektrum auf freie Sendefrequenzen zu analysieren. Das Frequenzanalysemodul kann hierbei einen Bestandteil des Mikrofonmoduls und/oder der Basisstation und/oder einer weiteren Komponente des Mikrofonsystems sein. Die Aufgabe des Frequenzanalysemoduls ist es, freie, ungestörte Sendefrequenzen zu detektieren. Diese freien Sendefrequenzen werden beispielsweise als eine Liste bereitgestellt. Vorzugsweise ist das Sendefrequenzspektrum und/oder die Sendefrequenzen und/oder die Nutzfrequenz im VHF/UHF-Frequenzbereich. Nachdem diese Frequenzbereiche auch durch das terrestrische Fernsehen genutzt werden, sind die Mikrofonsysteme Zweitnutzer dieser Frequenzbereiche. Dies bedeutet, dass das Mikrofonsystem am Verwendungsort nur freie, das heißt, durch das Fernsehen nicht belegte Frequenzen nutzen darf. Zusätzlich können auf manchen Frequenzen auch Störungen durch andere elektrische Geräte vorhanden sein. Eine weitere Störquelle sind Intermodulationen zwischen den Mikrofonmodulen bzw. Intermodulationen anderer Signale untereinander oder anderer Signale zu den Mikrofonmodulen. Auch diese Störungen werden durch das Frequenzanalysemodul erfasst und bei der Detektion von freien Frequenzen berücksichtigt.

Bei einer bevorzugten Ausführungsform der Erfindung sind die mehreren möglichen Sendefrequenzen aus der Liste der freien Sendefrequenzen ausgewählt. Somit stellt die Analyse freier Sendefrequenzen eine erste Einschränkung bei der Wahl der Nutzfrequenz ein und beschleunigt das Verfahren zur Auswahl der Nutzfrequenz.

Erfindungsgemäß ist die Verbindung zwischen Mikrofonmodul und Basisstation unidirektional.

Wenn das Mikrofonsystem eine Mehrzahl von Mikrofonmodulen und Basisstationen aufweist, ist es eine vorteilhafte Weiterbildung der Erfindung, wenn das Mikrofonsystem Mittel zur Zuteilung und/oder zur Regelung der Vergabereihenfolge der Nutzfrequenzen für die Zuordnung Mikrofonmodul-Basisstation aufweist. In diesem Fall stellt sich nämlich die Aufgabe, die Mikrofonmodule zu den Basisstationen zuzuordnen und jeder Zuordnung eine Nutzfrequenz zu zuweisen, ohne Nutzfrequenzen zweifach zu vergeben und/oder in Frequenzbereichen zu vergeben, die durch bereits vergebene Nutzfrequenzen gestört sind und/oder die bereits vergebene Nutzfrequenzen stören könnten. Insbesondere können Störungen durch Crossmodulationen oder Intermodulationsprodukte begründet sein. Die Intermodulationsprodukte bilden sich aus bei zwei benachbart zueinander angeordneten Nutzfrequenzen f1 und F2, wobei z.B. die Intermodulationsprodukte dritter Ordnung an der Frequenz: Fmod=(2*F1-F2) bzw. Fmod=(2*F2-F1) angeordnet sind. Ferner können bei ungünstigen Verhältnissen von Positionierung der Basisstation bzw. der Mikrofonmodule, ungünstiger Sendeleistungsverteilung und benachbarter Sendefrequenzen Störungen auftreten. Die Verwaltung der Nutzfrequenzen oder die Verwaltung der Abfolge der Vergabe der Nutzfrequenzen kann durch das Mittel umgesetzt werden.

Besonders bevorzugt weist das Mikrofonsystem eine Steuerungseinrichtung als das Mittel auf, die ausgebildet ist, die Liste der freien Sendefrequenzen zu halten und die Nutzfrequenzen an die Mehrzahl der Zuordnungen von Mikrofonmodul-Basisstationen unter Berücksichtigung von Intermodulationsprodukten zu verteilen. Durch die Steuerungseinrichtung ist es als zentrale Einrichtung möglich, die Nutzfrequenzen aus den freien Sendefrequenzen derart zu verteilen, dass Wechselwirkungen zwischen den einzelnen Zuordnungen Mikrofonmodul-Basisstation nur schwach ausgeprägt oder minimiert sind.

Ein weiterer Gegenstand der Erfindung betrifft ein Verfahren zur Auswahl einer Nutzfrequenz für ein Mikrofonsystem, vorzugsweise für ein Mikrofonsystem nach einem der vorhergehenden Ansprüche bzw. wie zuvor beschrieben, mit mindestens einer Basisstation und mindestens einem Mikrofonmodul, wobei von dem Mikrofonmodul auf einer Nutzfrequenz Audioinformationen bzw. Testinformationen an die Basisstation übertragen und/oder übertragbar sind und wobei die Empfangsqualität von mehreren Sendefrequenzen analysiert wird.

Erfindungsgemäß ist vorgesehen, dass die Nutzfrequenz aus den mehreren Sendefrequenzen unter Berücksichtigung der analysierten Empfangsqualität automatisch ausgewählt wird. Das Verfahren spiegelt noch einmal die erfinderische Idee wider, eine automatische Auswahl und damit auch Optimierung der Nutzfrequenz aus mehreren Sendefrequenzen zu ermöglichen.

Nach der Auswahl der Nutzfrequenz wird diese bei einer ersten Möglichkeit des Verfahrens angezeigt und muss von einem Nutzer manuell an dem Mikrofonmodul eingestellt werden. Vorzugsweise wird die Nutzfrequenz an der Basisstation automatisch eingestellt.

Bei einer vorteilhaften Weiterbildung der Erfindung wird das Sendefrequenzspektrum vorzugsweise vor der Auswahl der Nutzfrequenz auf freie Sendefrequenzen analysiert, wobei nachfolgend die Empfangsqualität nur von freien Sendefrequenzen analysiert wird. Dadurch, dass gestörte oder belegte Sendefrequenzen bzw. -bereiche nicht analysiert werden, kann dieser Abschnitt des Verfahrens effektiver und damit schnell durchgeführt werden.

Zur Abfolge des Verfahrens sind verschiedene Möglichkeiten denkbar:

Bei einer erfindungsgemäßen Verfahrensalternative ist ein Vorgehen ohne Rückkanal vorgesehen. Hierbei ist vorgesehen, dass das Mikrofonmodul nach einem definierten Muster, zum Beispiel in festgelegten Zeitintervallen, auf den Sendefrequenzen und/oder nur auf den freien Sendefrequenzen Testfrequenzen oder reale Audioinformationen sendet. Alternativ zu den Zeitintervallen kann das Mikrofonmodul dem Empfangsanalysemodul z.B. über eine gesendete Zwischeninformation mitteilen, wann er auf die nächste Sendefrequenz schaltet. Prinzipiell ist es auch möglich, dass das Mikrofonmodul dem Empfangsanalysemodul mitteilt, auf welche Sendefrequenz er als nächstes schalten wird. Das Empfangsanalysemodul beurteilt für jede Sendefrequenz die Empfangsqualität und wählt eine Nutzfrequenz abhängig von der Empfangsqualität aus und stellt diese an der Bedienung, zum Beispiel an einem Display, dar. Nachfolgend stellt der Nutzer die Nutzfrequenz manuell am Mikrofonmodul ein.

Werden mehrere Mikrofonmodul Basisstationen Zuordnungen initialisiert, muss der gewählte Vorgang für jede Zuordnung durchgeführt werden. Vorzugsweise werden auf den bereits mit Nutzfrequenzen versorgten Mikrofonsystemen Testsequenzen übertragen, so dass die nachfolgenden Mikrofonsysteme erkennen, dass diese Nutzfrequenzen bereits belegt sind und/oder Intermodulationsprodukte dieser Nutzfrequenzen erkennen.

Im einfachsten Fall muss der Nutzer den Vorgang für jede Zuordnung manuell starten. Bei einer Weiterbildung der Erfindung kann der Vorgang vereinfacht werden, indem ein Startsignal von Zuordnung zu Zuordnung weitergegeben wird. Es ist auch möglich, dass der Ablauf insbesondere zentral von der zuvor beschriebenen Steuerungseinrichtung als Mastereinheit verwaltet und organisiert wird. In diesem Fall kann der Ablauf der Installation wie folgt stattfinden:
In einem ersten Schritt werden freie Sendefrequenzen durch das Frequenzanalysemodul erfasst und evaluiert. In einem nächsten Schritt werden die Empfangsqualität und insbesondere die Empfangsleistungen der einzelnen Zuordnungen geprüft, welche insbesondere von der jeweiligen Entfernung zwischen Mikrofonmodul und Basisstation abhängen. In einem nachfolgenden Schritt berechnet die Steuerungseinrichtung geeignete Nutzfrequenzen für jede Zuordnung unter Berücksichtigung der Empfangsqualität und aller relevanten Intermodulationsprodukte. In einem letzten Schritt erfolgt die Zuteilung der Nutzfrequenzen an die Zuordnungen, insbesondere die Mikrofonmodule und die zugeordneten Basisstationen.

Alternativ zu der zeitgleichen Verteilung der Nutzfrequenzen kann für jede Zuordnung sequentiell eine Nutzfrequenz festgelegt werden und diese der Zuordnung mitgeteilt werden. Im Weiteren können dann freie Frequenzen durch das Frequenzanalysemodul neu ausgemessen werden.

Weitere Merkmale, Vorteile und Wirkungen der Erfindung ergeben sich aus der nachfolgenden Beschreibung eines bevorzugten Ausführungsbeispiels der Erfindung sowie den beigefügten Figuren. Dabei zeigen:
Figur 1 eine schematische Blockdarstellung einer Mikrofonmodul-Basisstation-Zuordnung als ein erstes Ausführungsbeispiel der Erfindung;
Figur 2 die Zuordnung in der Figur 1 in einer modifizierten Form;
Figur 3 ein Mikrofonsystem mit einer Mehrzahl derartiger Zuordnungen als ein drittes Ausführungsbeispiel der Erfindung;
Figur 4a einen Graph zur Illustration von Störungen durch benachbarte Sendefrequenzen bei den Mikrofonmodulen;
Figur 4b den Graph in Figur 4a mit anderen Sendeleistungen;
Figur 5 einen Graph zur Darstellung der Entstehung von Intermodulationsprodukten;
Figur 6a, b die Zuordnung in der Figur 2 bei einem Verfahren zur Auswahl einer Nutzfrequenz als ein weiteres Ausführungsbeispiel der Erfindung;
Figur 7 ein Blockdiagramm zur Illustration von Möglichkeiten der Bewertung der Empfangsqualitäten;
Figur 8 in gleicher Darstellung wie die Figuren 7a, b eine Erweiterung des Verfahrens;
Figur 9 ein Blockdiagramm eines Mikrofonsystems mit einer Mehrzahl von Zuordnungen mit einer ersten Möglichkeit einer Koordination;
Figur 10 das Mikrofonsystem in der Figur 9 in einer Weiterbildung als ein nächstes Ausführungsbeispiel der Erfindung;

Einander entsprechende Teile oder Bezeichnungen sind jeweils mit einander entsprechenden Bezugszeichen versehen.

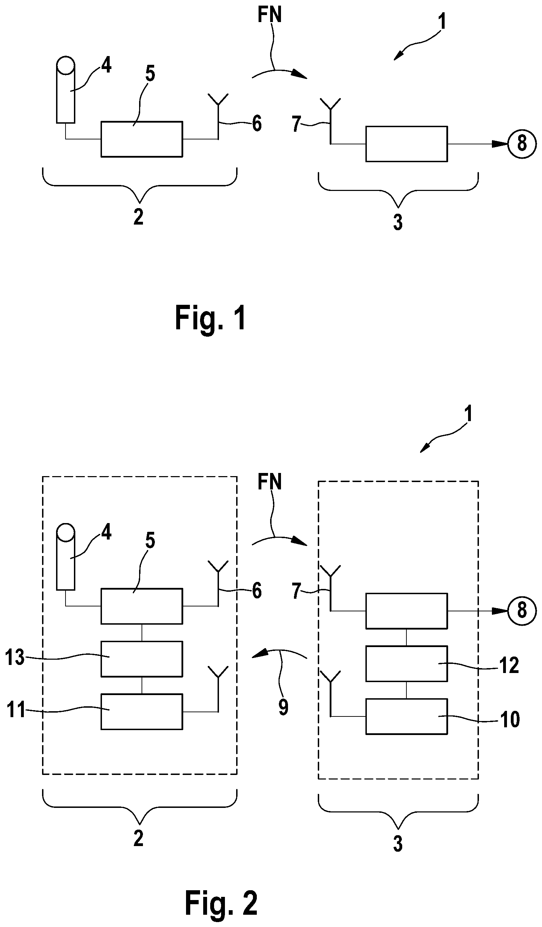

Die Figur 1 zeigt in einer schematischen Darstellung ein Mikrofonsystem 1, welches ein Mikrofonmodul 2 und eine Basisstation 3 umfasst. Das Mikrofonmodul 2 weist einen Mikrofonabschnitt 4 sowie einen Sendeabschnitt 5 auf, welcher über eine Antenne 6 mit dem Mikrofonabschnitt 4 aufgenommene Audiosignale als Audioinformationen drahtlos an die Basisstation 3 übertragen kann. Diese empfängt die Audioinformationen mit einer weiteren Antenne 7, wandelt sie gegebenenfalls in Audiosignale zurück und übergibt diese an ein Audiosenke 8, wie zum Beispiel einen Verstärker, ein Aufnahmegerät und dergleichen. Derartige Mikrofonsysteme 1 werden beispielsweise bei öffentlichen Veranstaltungen, wie Diskussionen, Schauspielen, Konzerten etc. eingesetzt. Die drahtlose Übertragung erfolgt über eine Nutzfrequenz Fn.

Die Figur 2 zeigt eine Erweiterung des Mikrofonsystems 1 in der Figur 1, wobei neben der drahtlosen Übertragung der Audioinformationen über die Nutzfrequenz Fn ein Rückkanal 9 vorgesehen ist, welcher ebenfalls drahtlos Steuerungssignale von der Basisstation 3 zu dem Mikrofonmodul 2 übertragen kann. Hierzu weist die Basisstation 3 einen Rückkanalsender und das Mikrofonmodul 2 einen Rückkanalempfänger 11 auf. Die Informationen, die über den Rückkanal 9 übertragen werden, werden durch eine Steuereinheit 12 auf Seiten der Basisstation 3 und einer Steuereinheit 13 auf Seiten des Mikrofonmoduls 2 umgesetzt. Beispielsweise wird über den Rückkanal 9 eine Information über die Nutzfrequenz Fn übertragen, so dass diese durch die Steuereinheit 13 in dem Sendeabschnitt 5 eingestellt werden kann.

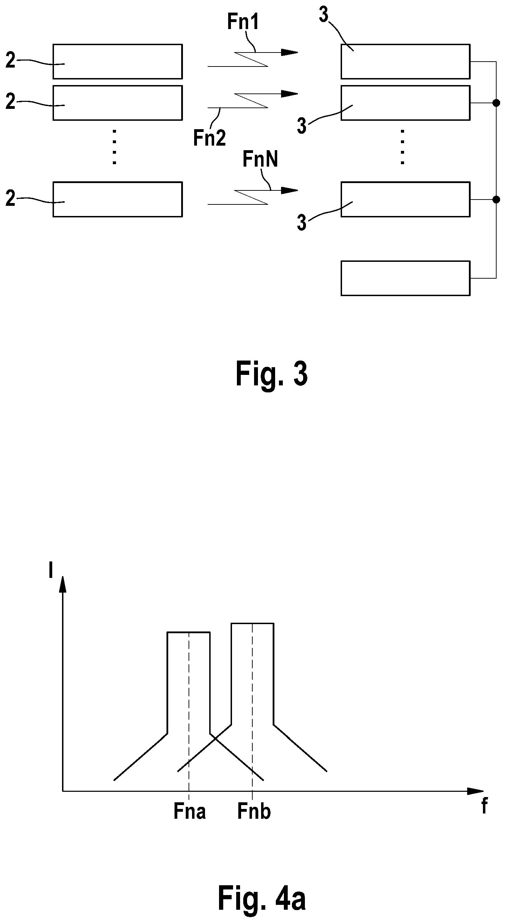

Die Figur 3 visualisiert die Situation, wenn nicht nur eine Zuordnung der Basisstation 3 - Mikrofonmodul 2 vorgesehen ist, sondern eine Mehrzahl davon. Die Figur 3 zeigt N derartige Zuordnungen. Damit die Zuordnungen ungestört voneinander übertragen können, müssen die Nutzfrequenzen Fn1 ... FnN unterschiedlich sein. Zudem müssen die Nutzfrequenzen, insbesondere in Abhängigkeit der Sendeleistung der Mikrofonmodule 2 und der örtlichen Nähe zueinander bestimmte Abstände zueinander aufweisen.

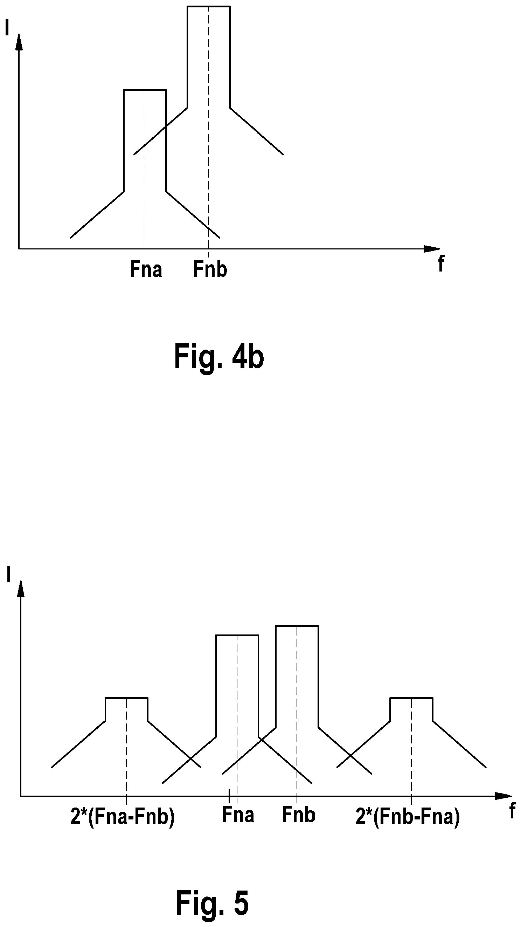

Diese Problematik ist beispielsweise in der Figur 4a visualisiert, die einen Graphen zeigt, bei der in sehr schematischer Weise die Frequenz f gegenüber einer Empfangsleistung I an den Basisstationen 3 aufgetragen ist. Gezeigt sind zwei Verteilungen um zwei Nutzfrequenzen Fna und Fnb, welche eine ähnliche Empfangsleistung I zeigen. Wie sich aus dem Graph entnehmen lässt, ist der Abstand zwischen den beiden Frequenzen ausreichend. Die Figur 4b zeigt dagegen die Situation, wenn die Empfangsleistung I stark unterschiedlich ausgeprägt sind, wobei die Empfangsleistung um die Nutzfrequenz Fnb deutlich größer ist als die Empfangsleistung I und die Nutzfrequenz Fna. Mit einer Schulter überlappt die Intensitätsverteilung der Frequenz Fnb deutlich mit der Intensitätsverteilung der Frequenz Fna, so dass zu erwarten ist, dass die Nutzfrequenz Fnb die Nutzfrequenz Fna stört. Bei der gezeigten Verteilung der Sendeleistungen ist der Abstand zwischen den Frequenzen Fna und Fnb zu klein gewählt. Eine weitere mögliche Störung ist in der Figur 5 dargestellt, wobei neben den Hauptfrequenzverteilung der Nutzfrequenzen Fna und Fnb Intermodulationsprodukte dargestellt sind, die sich an den Frequenzen 2 x (Fna - Fnb) und 2 x (Fnb - Fna) befinden. An diesen Frequenzen ist es nicht sinnvoll, weitere Nutzfrequenzen zu positionieren, da diese durch die Interpolationsprodukte gestört würden.

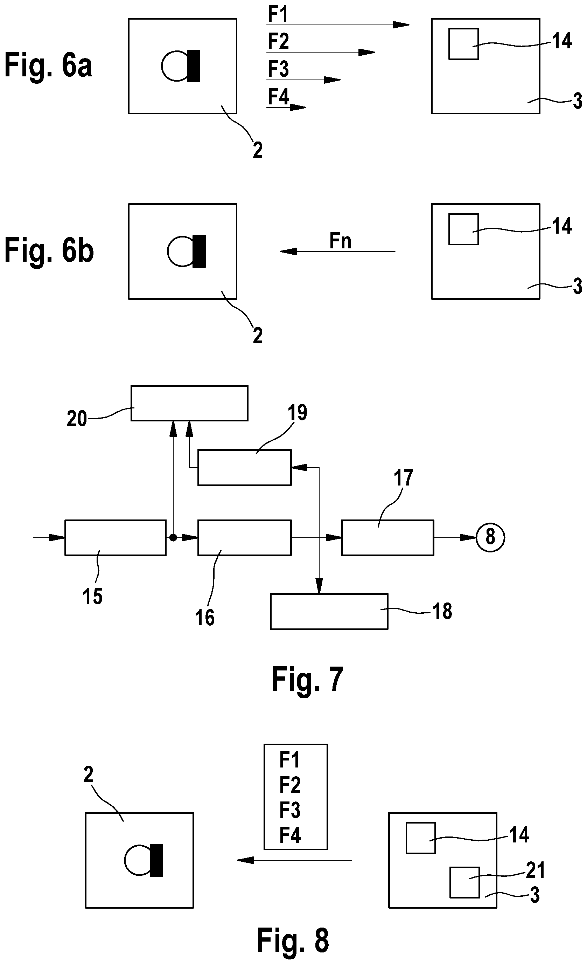

Die Figuren 6a, b illustrieren ein erstes Ausführungsbeispiel für ein Verfahren zur Einrichtung eines Mikrofonsystems 1 zum Beispiel nach Figur 2. In einem ersten Schritt werden von dem Mikrofonmodul 2 Testinformationen an die Basisstation 3 gesendet und zwar auf verschiedenen Sendefrequenzen F1 ... F4. Ein Empfangsanalysemodul 14 analysiert die Empfangsqualität und damit die Übertragungsqualität bei den unterschiedlichen Sendefrequenzen. Sind die gesendeten Audioinformationen oder Testinformationen digital kodiert, kann beispielsweise die Bit-Fehlerrate oder die Kanalbit-Fehlerrate als Fehlermaß herangezogen werden. Die Bestimmung dieser zwei Kenngrößen ist in der Figur 7 skizziert. Zunächst wird das empfangene Signal in einen Demodulator 15 eingebracht und nachfolgend in einen Kanaldecoder 16 geführt, wobei die Redundanz im Signal genutzt wird, um die Fehlerrate zu verringern. Bevor das Signal zur Audiosenke 8 geführt wird, kann eine zusätzliche Audioverarbeitung 17 erfolgen.

Sendet das Mikrofonmodul 2 eine der Basisstation 3 bekannte Bitfolge, zum Beispiel während des Installationsvorganges, so kann das Empfangsanalysemodul 14 durch einen Vergleich der bekannten Bitfolge mit der Bitfolge hinter dem Kanaldecoder 16 in einem Bitfehlerrateberechnungsmodul 18 die Bitfehlerrate bestimmen. Bei unbekannten Bitfolgen kann das Empfangsanalysemodul 14 die decodierte Bitfolge nach dem Kanaldecoder 16 in einem Kanalencoder 19 wieder encodieren und mit der Bitfolge vor dem Kanaldecoder 16 vergleichen. Dadurch kann die sogenannte Kanalbitfehlerrate von einem Kanalbitfehlerratenmodul 20 abgeschätzt werden.

Auf Basis dieser Fehlerkenngrößen kann das Empfangsanalysemodul 14 eine geeignete Nutzfrequenz auswählen und überträgt diese Nutzfrequenz Fn über den Rückkanal 9 an das Mikrofonmodul 2, welches die Nutzfrequenz dann als Sendefrequenz einstellt.

Die Figur 8 zeigt eine Erweiterung des Verfahrens in den Figuren 6a, b, wobei die Basisstation 3 ergänzend ein Frequenzanalysemodul 21 aufweist oder mit diesem gekoppelt ist. Das Frequenzanalysemodul 21 untersucht die möglichen Sendefrequenzen auf freie Sendefrequenzen. Bei diesem Schritt wird berücksichtigt, dass die meisten Mikrofonsysteme 1 im VHF/UHF-Frequenzbereich betrieben werden, welche auch durch das terrestrische Fernsehen genutzt wird. Damit sind die Mikrofonsysteme 1 Zweitnutzer dieses Frequenzbereiches, so dass die Mikrofonsysteme 1 am Verwendungsort nur freie, das heißt, durch das Fernsehen nicht belegte, Sendefrequenzen nutzen dürfen. Zusätzlich können sich durch die in den Figuren 4a, b und 5 dargestellten Wechselwirkungen weitere Störungen ergeben. Durch das Frequenzanalysemodul 21 wird eine erste Auswahl von freien Sendefrequenzen getroffen, welche, zum Beispiel als Tabelle, an das Mikrofonmodul 2 übergeben werden, so dass die Testinformationen nur und ausschließlich über die durch das Frequenzanalysemodul 21 als frei bestimmten Sendefrequenzen übertragen werden.

Für den Fall, dass kein Rückkanal 9 vorhanden ist, wie zum Beispiel in dem Mikrofonsystem 1 gemäß der Figur 1, kann das Mikrofonmodul 2 die Sendefrequenzen nach einem vorbestimmten Muster abfahren oder vor dem Wechsel der Sendefrequenz jeweils eine entsprechende Information an die Basisstation 3 übermitteln, so dass diese die Empfangsqualität bei den korrekten Sendefrequenzen misst. Die Einstellung der Nutzfrequenz Fn am Mikrofonmodul 2 erfolgt dann beispielsweise dadurch, dass die entsprechend ausgewählte Nutzfrequenz Fn an der Basisstation 3 angezeigt wird und ein Benutzer diese am Mikrofonmodul 2 einstellen muss.

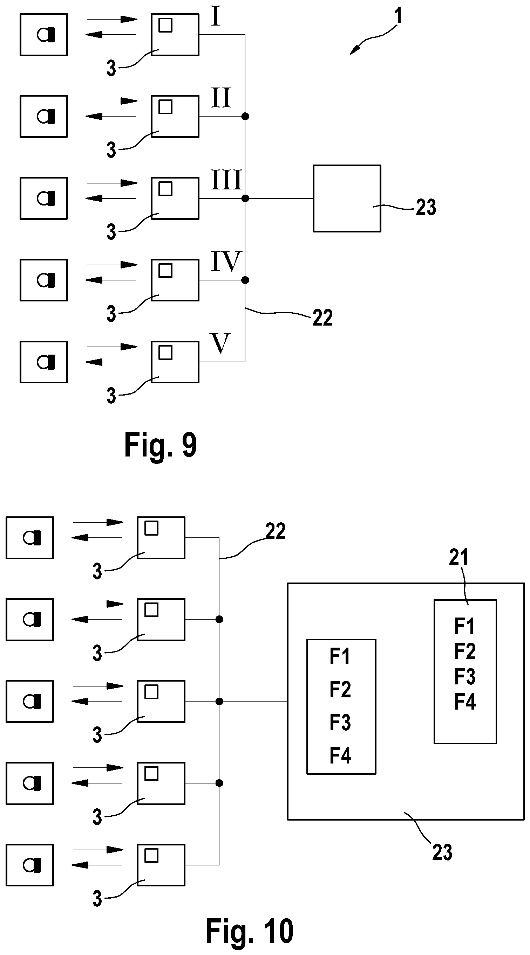

Die Figur 9 zeigt ein Mikrofonsystem 1, welches gemäß der Figur 3 eine Vielzahl von Zuordnungen umfasst. Die Basisstationen 3 sind über ein Netzwerk 22 miteinander verbunden und zudem mit einer zentralen Steuerungseinrichtung 23 gekoppelt. In dieser einfachen Ausführungsform regelt die Steuerungseinrichtung 23 nur die Reihenfolge, in der die Tests gemäß der Figuren 6a, b und 8 durchgeführt werden. So weist sie zum Beispiel der Zuordnung in der ersten Zeile die Position I zu, wobei diese dann als erste die Nutzfrequenz FnI suchen darf. Nachdem der Vorgang abgeschlossen ist, wird die Zuordnung in der zweiten Zeile mit der Position II gestartet etc. Besonders bevorzugt übertragen Zuordnungen nach der Einstellung der Nutzfrequenz ständig Testinformationen oder Audioinformationen, sodass gezielt die Störungen gemäß der Figuren 4 b bzw. 5 im Sendespektrum erzeugt werden und bei der Analyse der Empfangsqualität der nachfolgenden Zuordnung berücksichtigt werden. Es ist auch möglich, dass der Vorgang iterativ mehrmals durchgeführt wird, so dass auch die zuerst eingestellten Zuordnungen eine Nutzfrequenz erhalten, die nicht durch Störungen von später eingestellten Zuordnungen beeinträchtigt ist.

Die Figur 10 zeigt eine Weiterbildung der Erfindung, wobei die Steuerungseinrichtung 23 als ein Master ausgebildet ist, welcher zum einen das Frequenzanalysemodul 21 aufweist und das Sendespektrum auf freie Sendefrequenzen untersucht. Diese liegen dann als Liste zentral in der Steuerungseinrichtung 23 vor. Nachdem der Testzyklus zur Analyse der Empfangsqualität für jede Zuordnung durchlaufen ist, werden die Ergebnisse, das heißt die Empfangsqualitäten, an die Steuerungseinrichtung 23 zurückgemeldet, welche dann zugleich für alle Zuordnungen die Nutzfrequenzen Fn1 ... Fn4 erstellt. Dadurch, dass die Nutzfrequenzen zentral durch die Steuerungseinrichtung 23 ermittelt werden, können Wechselwirkungen, wie die Krossmodulationen, Intermodulationsprodukte, Überlagerungen etc., zwischen den einzelnen Zuordnungen entweder errechnet oder in einem späteren Schritt gemessen werden und bei der Erstellung der Nutzfrequenzen berücksichtigt werden.

### Bezugszeichenlisten

- 1: Mikrofonsystem
- 2: Mikrofonmodul
- 3: Basisstation
- 4: Mikrofonabschnitt
- 5: Sendeabschnitt
- 6: Antenne
- 7: Antenne
- 8: Audiosenke
- 9: Rückkanal
- 10 11: Rückkanalempfänger
- 12: Steuereinheit auf Seiten der Basisstation 3
- 13: Steuereinheit auf Seiten des Mikrofonmoduls 2
- 14: Empfangsanalysemodul
- 15: Demodulator
- 16: Kanaldecoder
- 17: Audioverarbeitung
- 18: Bitfehlerrateberechnungsmodul
- 19: Kanalencoder
- 20: Kanalbitfehlerratenmodul
- 21: Frequenzanalysemodul
- 22: Netzwerk
- 23: Steuerungseinrichtung

## Patentansprüche

1. Mikrofonsystem (1)
mit einer Basisstation (3) und
mit einem Mikrofonmodul (2),
wobei die Basisstation (3) ausgebildet ist, drahtlos auf einer Nutzfrequenz übermittelte Audioinformationen und optional ergänzend Testinformationen von dem Mikrofonmodul (2) zu empfangen, die Audioinformationen in Audiosignale umzuwandeln und an einen Verstärker oder an ein Aufnahmegerät weiterzugeben,
wobei die Basisstation (3) ein Empfangsanalysemodul (14) aufweist und/oder mit diesem gekoppelt ist, welches ausgebildet ist, die Empfangsqualität der Audioinformationen und/oder der Testinformationen bei mehreren möglichen Sendefrequenzen zu analysieren,
wobei
das Empfangsanalysemodul (14) ausgebildet ist, aus den mehreren möglichen Sendefrequenzen die Nutzfrequenz auszuwählen,
**dadurch gekennzeichnet, dass**
die Verbindung zwischen Mikrofonmodul (2) und der Basisstation (3) unidirektional ausgebildet ist und dass das Mikrofonmodul (2) ausgebildet ist, Audioinformationen auf den Sendefrequenzen zu senden und das Empfangsanalysemodul ausgebildet ist, für jede Sendefrequenz die Empfangsqualität zu beurteilen und die Nutzfrequenz abhängig von der Empfangsqualität auszuwählen.

2. Mikrofonsystem (1) nach Anspruch 1, **dadurch gekennzeichnet, dass** die Audioinformationen und/oder die Testinformationen als digitale Signale ausgebildet sind.

3. Mikrofonsystem (1) nach Anspruch 2, **dadurch gekennzeichnet, dass** die Empfangsqualität auf Basis einer Fehferbitrate und/oder einer Kanalfehlerbitrate analysiert wird.

4. Mikrofonsystem (1) nach einem der vorhergehenden Ansprüche,
**gekennzeichnet durch** ein Frequenzanalysemodul (21), welches ausgebildet ist, ein Frequenzspektrum auf freie Sendefrequenzen zu analysieren.

5. Mikrofonsystem (1) nach einem der vorhergehenden Ansprüche,
**gekennzeichnet durch** eine Mehrzahl von Mikrofonmodulen (2) und Basisstationen (3), **gekennzeichnet durch** ein Mittel (23) zur Zuteilung und/oder zur Regelung der Vergabereihenfolge der Nutzfrequenzen für die Zuordnung Mikrofonmodul- (2) - Basisstation (3).

6. Mikrofonsystem (1) nach einem der vorhergehenden Ansprüche,
**gekennzeichnet durch** eine Steuerungseinrichtung (23), die ausgebildet ist, eine Liste der freien Sendefrequenzen zu halten und die Nutzfrequenzen unter Berücksichtigung von Intermodulationsprodukten der Nutzfrequenzen zu verteilen.

7. Verfahren zur Auswahl einer Nutzfrequenz für ein Mikrofonsystem (1) nach einem der vorhergehenden Ansprüche mit mindestens der Basisstation (3) und mindestens dem Mikrofonmodul (2), wobei die Basisstation (3) ausgebildet ist, drahtlos auf einer Nutzfrequenz übermittelte Audioinformationen und optional ergänzend Testinformationen von dem Mikrofonmodul (2) zu empfangen, in Audiosignale umzuwandeln und an einen Verstärker oder an ein Aufnahmegerät weiterzugeben, wobei das Mikrofonmodul (2) Audioinformationen auf den Sendefrequenzen sendet, wobei die Empfangsqualität bei mehreren Sendefrequenzen analysiert wird, wobei die Nutzfrequenz aus den mehreren Sendefrequenzen unter Berücksichtigung der Empfangsqualität automatisch ausgewählt wird.

8. Verfahren nach Anspruch 7, **dadurch gekennzeichnet, dass** das Sendefrequenzspektrum auf freie Sendefrequenzen analysiert wird, wobei nachfolgend die Empfangsqualität nur von den freien Sendefrequenzen analysiert wird.

## Claims

1. Microphone system (1)
having a base station (3) and
having a microphone module (2),
wherein the base station (3) is designed to receive audio information and optionally in addition test information, transmitted on an operating frequency, wirelessly from the microphone module (2), to convert the audio information into audio signals and to forward them to an amplifier or to a recording device,
wherein the base station (3) has a reception analysis module (14) and/or is coupled to the latter which is designed for analyzing the quality of reception of the audio information and/or of the test information at a number of possible transmitting frequencies,
wherein the reception analysis module (14) is designed for selecting the operating frequency from the plurality of possible transmitting frequencies,
**characterized in that**
the connection between the microphone module (2) and the base station (3) is designed to be unidirectional, and **in that** the microphone module (2) is designed to transmit audio information on the transmitting frequencies, and the reception analysis module is designed to assess the quality of reception for each transmitting frequency and to select the operating frequency on the basis of the quality of reception.

2. Microphone system (1) according to Claim 1, **characterized in that** the audio information and/or the test information is designed as digital signals.

3. Microphone system (1') according to Claim 2, **characterized in that** the quality of reception is analyzed on the basis of a bit error rate and/or a channel bit error rate.

4. Microphone system (1) according to one of the preceding claims, **characterized by** a frequency analysis module (21) which is designed for analyzing a frequency spectrum for free transmitting frequencies.

5. Microphone system (1) according to one of the preceding claims, **characterized by** a plurality of microphone modules (2) and base stations (3), **characterized by** a means (23) for allocating and/or for controlling the order of issuance of the operating frequencies for the microphone module (2) - base station (3) allocation.

6. Microphone system (1) according to one of the preceding claims, **characterized by** a control device (23) which is designed for holding a list of the free transmitting frequencies and distributing the operating frequencies, taking into consideration intermodulation products of the operating frequencies.

7. Method for selecting an operating frequency for a microphone system (1) according to one of the preceding claims having at least the base station (3) and at least the microphone module (2), wherein the base station (3) is designed to receive audio information and optionally in addition test information, transmitted wirelessly on an operating frequency, from the microphone module (2), to convert it into audio signals and to forward them to an amplifier or to a recording device, wherein the microphone module (2) transmits audio information on the transmitting frequencies, wherein the quality of reception is analyzed at a plurality of transmitting frequencies, wherein the operating frequency is selected automatically from the plurality of transmitting frequencies, taking into consideration the quality of reception.

8. Method according to Claim 7, **characterized in that** the transmitting frequency spectrum is analyzed for free transmitting frequencies, wherein the quality of reception of only the free transmitting frequencies is analyzed subsequently.

## Revendications

1. Système à microphone (1)
comprenant une station de base (3) et
comprenant un module à microphone (2),
la station de base (3) étant configurée pour recevoir, sans fil de la part du module à microphone (2), des informations audio et des informations d'essai complémentaires optionnelles transmises sur une fréquence utile, convertir les informations audio en signaux audio et les transférer à un amplificateur ou à un appareil d'enregistrement,
la station de base (3) possédant un module d'analyse de réception (14) et/ou étant connectée à celui-ci, lequel est configuré pour analyser la qualité de réception des informations audio et/ou des informations d'essai à plusieurs fréquences d'émission possibles,
le module d'analyse de réception (14) étant configuré pour sélectionner la fréquence utile à partir des plusieurs fréquences d'émission possibles,
**caractérisé en ce que**
la liaison entre le module à microphone (2) et la station de base (3) est de configuration unidirectionnelle et **en ce que** le module à microphone (2) est configuré pour émettre des informations audio sur les fréquences d'émission et le module d'analyse de réception est configuré pour évaluer la qualité de réception pour chaque fréquence d'émission et sélectionner la fréquence utile en fonction de la qualité de réception.

2. Système à microphone (1) selon la revendication 1, **caractérisé en ce que** les informations audio et/ou les informations d'essai sont configurées sous la forme de signaux numériques.

3. Système à microphone (1) selon la revendication 2, **caractérisé en ce que** la qualité de réception est analysée sur la base d'un débit de bits erronés et/ou d'un débit de bits erronés de canal.

4. Système à microphone (1) selon l'une des revendications précédentes, **caractérisé par** un module d'analyse de fréquence (21) qui est configuré pour analyser un spectre de fréquences pour y rechercher des fréquences d'émission libres.

5. Système à microphone (1) selon l'une des revendications précédentes, **caractérisé par** une pluralité de modules à microphone (2) et de stations de base (3), **caractérisé par** un moyen (23) servant à assigner et/ou à réguler la séquence d'attribution des fréquences utiles pour l'association module à microphone (2) - station de base (3).

6. Système à microphone (1) selon l'une des revendications précédentes, **caractérisé par** un dispositif de commande (23) qui est configuré pour maintenir une liste des fréquences d'émission libres et distribuer les fréquences utiles en tenant compte des produits d'intermodulation des fréquences utiles.

7. Procédé de sélection d'une fréquence utile pour un système à microphone (1) selon l'une des revendications précédentes, comprenant au moins la station de base (3) et au moins le module à microphone (2), la station de base (3) étant configurée pour recevoir, sans fil de la part du module à microphone (2), des informations audio et des informations d'essai complémentaires optionnelles transmises sur une fréquence utile, les convertir en signaux audio et les transférer à un amplificateur ou à un appareil d'enregistrement, le module à microphone (2) émettant des informations audio sur les fréquences d'émission, la qualité de réception étant analysée à plusieurs fréquences d'émission, la fréquence utile étant sélectionnée automatiquement à partir des plusieurs fréquences d'émission en tentant compte de la qualité de réception.

8. Procédé selon la revendication 7, **caractérisé en ce que** le spectre de fréquences d'émission est analysé pour y rechercher des fréquences d'émission libres, seule la qualité de réception des fréquences d'émission libres étant ensuite analysée.
